# EUROPÄISCHE PATENTSCHRIFT

(11) **EP 3 753 871 B1**
(45) Veröffentlichungstag und Bekanntmachung des Hinweises auf die Patenterteilung: **23.08.2023**
(21) Anmeldenummer: 19181106.6
(22) Anmeldetag: 19.06.2019
(51) Int. Cl.: B65G 27/04, B65B 37/04, B65B 57/14, B65G 43/08, G01N 21/95, B07C 5/36

(54) **VORRICHTUNG UND VERFAHREN ZUR ÜBERGABE VON MEDIZINISCHEN PRODUKTEN**
METHOD AND DEVICE FOR PROVIDING MEDICAL PRODUCTS
DISPOSITIF ET PROCÉDÉ DE TRANSFERT DE PRODUITS MÉDICAUX

(43) Veröffentlichungstag der Anmeldung: 23.12.2020
(73) Patentinhaber: Uhlmann Pac-Systeme GmbH & Co. KG, 88471 Laupheim (DE)
(72) Erfinder: Heim, Ralf, 88471 Laupheim (DE); Kronawitter, Michael, 89179 Beimerstetten (DE)
(74) Vertreter: Wächter, Jochen

(56) Entgegenhaltungen:
- EP-A1- 2 003 074
- EP-A2- 2 246 278
- WO-A1-2016/132281
- WO-A1-2018/166894
- WO-A2-03/097459
- CA-A1- 2 914 115
- DE-A1-102008 027 624
- DE-C1- 4 312 550
- IT-A1- BO20 090 499
- JP-A- 2015 059 016
- US-A- 5 518 102
- US-A1- 2007 193 854

## Beschreibung

Die vorliegende Erfindung betrifft eine Vorrichtung und ein Verfahren zur Übergabe von medizinischen Produkten in Form von Tabletten, Kapseln, Dragees oder Oblongs.

Schlechtprodukte werden bei pharmazeutischen Verpackungsprozessen nicht akzeptiert. Dies betrifft sowohl die Abfüllung von Tabletten in Blisterverpackungen als auch die Abfüllung von Tabletten in sogenannte Flaschen, d.h. mit einem Verschluss versehene Behälter, die üblicherweise aus Kunststoff oder Glas hergestellt sind.

Der Erkennung von Schlechtprodukten wird in der pharmazeutischen Industrie besondere Beachtung geschenkt. Hierzu existiert eine Vielzahl von verschiedenen Detektionsvorrichtungen, die auf unterschiedlichen Prinzipien beruhen. Damit können beispielsweise die Grö-ße und Form von Tabletten, die Zusammensetzung der Bestandteile einer Tablette oder der Füllgrad von Kapseln überprüft werden.

Oftmals werden derartige Kontrollmechanismen bei der Abfüllung der medizinischen Produkte durchgeführt, während sich die medizinischen Produkte auf einem vibrierenden Schwingförderer vorwärtsbewegen. Zumeist wird bei Erkennung eines Schlechtprodukts nicht nur das einzelne Schlechtprodukt ausgeschieden, sondern die gesamte Charge von in diesem Arbeitsschritt zu befüllenden Blisterverpackungen bzw. Flaschen wird entsorgt, bevor ein neuer Abfüllvorgang mit neuen Blisterverpackungen bzw. Flaschen wieder von vorne beginnt. Dies verursacht einen hohen Ausschuss von an sich guten medizinischen Produkten, den es zu vermeiden gilt.

Aus diesem Grund wurden bereits in der Vergangenheit Vorrichtungen entwickelt, die Schlechtprodukte während ihres Falls im Füllschacht seitlich ausblasen oder einzelne Produkte mittels eines von oben auf den Schwingförderer abgesenkten Sauggreifers vom Schwingförderer nehmen.

Das Dokument WO 2016/132281 A1 offenbart eine Vorrichtung zur Übergabe von medizinischen Produkten nach dem Oberbegriff des Anspruchs 1 und ein Verfahren zur Übergabe von medizinischen Produkten nach dem Oberbegriff des Anspruchs 8.

Der vorliegenden Erfindung liegt die Aufgabe zugrunde, eine Vorrichtung zu schaffen, mit der eine sichere Ausschleusung einzelner Schlechtprodukte erfolgen kann und die konstruktiv möglichst einfach ausgestaltet ist, sowie ein entsprechendes Verfahren zur Übergabe von medizinischen Produkten zu schaffen.

Diese Aufgabe wird durch die Merkmale des Anspruchs 1 und des Anspruchs 8 gelöst.

Erfindungsgemäß umfasst die Vorrichtung zur Übergabe von medizinischen Produkten einen Schwingförderer mit einer Mehrzahl von nebeneinander angeordneten Förderspuren zum Transportieren der medizinischen Produkte zu einem Abgabebereich der Förderspuren, eine Detektionsvorrichtung zur Detektion von Schlechtprodukten in jeder Förderspur und mindestens einen Schacht, dessen Aufnahmeöffnung nahe dem Abgabebereich mindestens einer der Förderspuren angeordnet ist und der zur Weiterleitung der aus der oder den Förderspuren austretenden medizinischen Produkte in Richtung eines Abfüllbereichs dient, wobei die Förderspuren und der mindestens eine Schacht gemeinsam mehrere Transportpfade für die medizinischen Produkte definieren. Eine Ausleiteinheit für Schlechtprodukte ist nahe dem Abgabebereich der Förderspuren angeordnet und umfasst mindestens eine Ausleitvorrichtung. Eine Steuervorrichtung ist darauf ausgerichtet, die mindestens eine Ausleitvorrichtung zu aktivieren, wenn von der Detektionsvorrichtung ein Schlechtprodukt erkannt wurde. Die mindestens eine Ausleitvorrichtung ist verschiebbar oder verschwenkbar gelagert und ist zwischen einer deaktivierten Stellung, in der sie sich außerhalb eines jeden Transportpfads der medizinischen Produkte befindet, und einer aktivierten Stellung, in der sie sich in mindestens einem der Transportpfade der medizinischen Produkte befindet, bewegbar.

Mit dieser Ausgestaltung ist es möglich, eine extrem hohe Sicherheit beim Ausschleusen einzelner Schlechtprodukte zu gewährleisten, während gleichzeitig ein relativ einfacher Aufbau der Gesamtvorrichtung erzielt wird.

Die mindestens eine Ausleitvorrichtung ist derart verschiebbar oder verschwenkbar, dass sie in der aktivierten Stellung im oder nahe dem Abgabebereich mindestens einer der Förderspuren eine Änderung mindestens eines der Transportpfade der medizinischen Produkte bewirkt.

Erfindungsgemäß gelingt dies dadurch, dass die mindestens eine Ausleitvorrichtung in der aktivierten Stellung eine Verlängerung mindestens einer der Förderspuren bildet. Somit ist die Ausleitvorrichtung in der aktivierten Stellung als mechanisch passives Element ausgebildet, das den jeweiligen Transportpfad auf sichere Weise mechanisch unterbricht und somit für eine gezielte Ausscheidung von Schlechtprodukten verwendet werden kann.

Im Sinne einer konstruktiv einfachen Ausgestaltung ist die mindestens eine Ausleitvorrichtung derart verschiebbar oder verschwenkbar, dass sie in der aktivierten Stellung von den Schwingungen der Förderspuren entkoppelt ist. Auch wenn der Schwingförderer in Betrieb ist und das Schlechtprodukt in Richtung der Ausleitvorrichtung fördert, kann die Ausleitvorrichtung somit stationär verbleiben, was den konstruktiven Aufwand reduziert.

Besonders bevorzugt ist es, dass die mindestens eine Ausleitvorrichtung im Wesentlichen horizontal verschiebbar ist. Dadurch kann die Ausleitvorrichtung auf einfache Weise in der deaktivierten Stellung die Aufnahmeöffnung des Schachts freigeben und in der aktivierten Stellung die Aufnahmeöffnung des Schachts verschließen.

Es ist besonders bevorzugt, dass die Ausleiteinheit pro Förderspur jeweils eine eigene Ausleitvorrichtung aufweist. Somit können einzelne Schlechtprodukte aus jeder einzelnen Förderspur isoliert entnommen werden, ohne dass Gutprodukte aus anderen Förderspuren desselben Schwingförderers ebenfalls aussortiert werden müssen. Dadurch wird der Ausschuss von Gutprodukten verhindert.

In einer Ausführungsform umfasst die Ausleiteinheit mindestens eine Absaugvorrichtung für in die Ausleiteinheit eintretende Schlechtprodukte. Somit gelingt es, die in die Ausleiteinheit eintretenden Schlechtprodukte auf sichere und schnelle Art und Weise zu entfernen.

In einer bevorzugten Ausführungsform weist die Detektionsvorrichtung ein Kamerasystem mit mindestens einer über mindestens einer der Förderspuren angeordneten Kamera auf. Kameras sind insbesondere für die Detektion von Größe, Form und Farbe von Tabletten besonders geeignet und besitzen eine hohe Auflösung.

Das erfindungsgemäße Verfahren zur Übergabe von medizinischen Produkten umfasst folgende Schritte:
- Transportieren von medizinischen Produkten auf einem Schwingförderer mit einer Mehrzahl von nebeneinander angeordneten Förderspuren zu einem Abgabebereich der Förderspuren und von dort in mindestens einen Schacht;
- Detektieren eines Schlechtprodukts in einer der Förderspuren;
- Aktivieren einer Ausleitvorrichtung für Schlechtprodukte, die nahe dem Abgabebereich dieser Förderspur angeordnet ist, im Falle des Detektierens eines Schlechtprodukts, wobei die Ausleitvorrichtung bei Aktivierung in eine aktivierte Stellung verschoben oder verschwenkt wird, in der sie sich in einem Transportpfad des Schlechtprodukts befindet.

Mit diesem Verfahren ist eine einfache und sichere Ausschleusung von isolierten Schlechtprodukten möglich.

Die Ausleitvorrichtung bewirkt in der aktivierten Stellung im Abgabebereich der Förderspur eine Änderung des Transportpfads der medizinischen Produkte.

Erfindungsgemäß bildet die Ausleitvorrichtung in der aktivierten Stellung eine Verlängerung der Förderspur.

Zur schnelleren Entsorgung des Schlechtprodukts und zur Beschleunigung des Gesamtprozesses ist es bevorzugt, dass das in die Ausleitvorrichtung eingetretene Schlechtprodukt abgesaugt wird.

Zur Erhöhung der Sicherheit des Ausschleuseprozesses ist es bevorzugt, dass das Detektieren des Schlechtprodukts zumindest im Abgabebereich der Förderspur erfolgt. Auf diese Weise kann der Zeitpunkt der Aktivierung der Ausleitvorrichtung besonders genau bestimmt werden.

Bevorzugt erfolgt das Detektieren mittels eines Kamerasystems. Das Kamerasystem kann das Schlechtprodukt auch über einen gewissen Zeitraum verfolgen, bis das Schlechtprodukt im Abgabebereich ankommt.

Zur weiteren Absicherung des Ausschleuseprozesses des Schlechtprodukts befindet sich ein dem zugehörigen Schacht zugeordneter Zählsensor während der Ausleitung des Schlechtprodukts vorzugsweise in einem Überwachungsmodus, und bei Zählung eines Produkts wird eine Abbruchsequenz des Abfüllvorgangs eingeleitet. In diesem Fall ist davon auszugehen, dass das Schlechtprodukt trotz aller Vorkehrungen in den Schacht gelangt ist, so dass weitere Maßnahmen notwendig werden. Derartige Abbruchsequenzen beinhalten in der Regel den Maschinenstopp sowie die Entfernung der zum jeweiligen Zeitpunkt zu befüllenden Blisterverpackungen bzw. Flaschen.

Eine besonders sichere Ausschleusung des Schlechtprodukts wird schließlich vorzugsweise dadurch erreicht, dass die Förderspur zunächst unbewegt geschaltet wird, wenn das Schlechtprodukt sich im Abgabebereich auf der Förderspur befindet, und die Förderspur erst dann wieder in Schwingung versetzt wird, wenn sich die Ausleitvorrichtung in der aktivierten Stellung befindet.

Weitere Merkmale und Vorteile der vorliegenden Erfindung ergeben sich aus der nachfolgenden Beschreibung unter Bezugnahme auf die Zeichnungen.
- Fig. 1: ist eine schematische Querschnittsansicht einer Ausführungsform der erfindungsgemäßen Vorrichtung zur Übergabe von medizinischen Produkten bei einer deaktivierten Stellung der Ausleitvorrichtung;
- Fig. 2: ist eine schematische Querschnittsansicht der erfindungsgemäßen Vorrichtung zur Übergabe von medizinischen Produkten aus Fig. 1 bei einer aktivierten Stellung der Ausleitvorrichtung;
- Fig. 3: ist eine schematische Querschnittsansicht einer alternativen Ausführungsform der erfindungsgemäßen Vorrichtung zur Übergabe von medizinischen Produkten bei einer deaktivierten Stellung der Ausleitvorrichtung;
- Fig. 4: ist eine schematische Querschnittsansicht der erfindungsgemäßen Vorrichtung zur Übergabe von medizinischen Produkten aus Fig. 3 bei einer aktivierten Stellung der Ausleitvorrichtung;
- Fig. 5 bis 13: sind schematische Querschnittsansichten der Vorrichtung aus Fig. 1 und 2 zu verschiedenen Zeitpunkten des erfindungsgemäßen Verfahrens zum Übergeben von medizinischen Produkten.

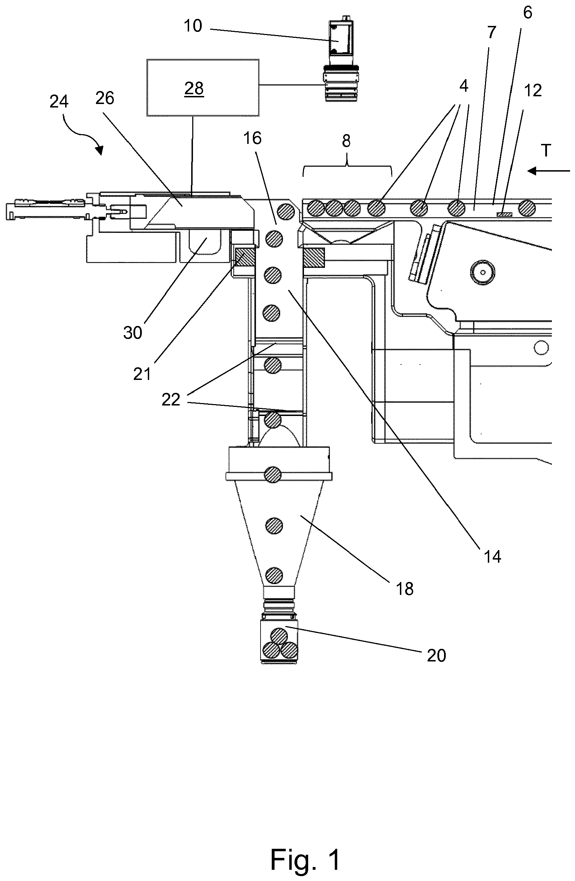

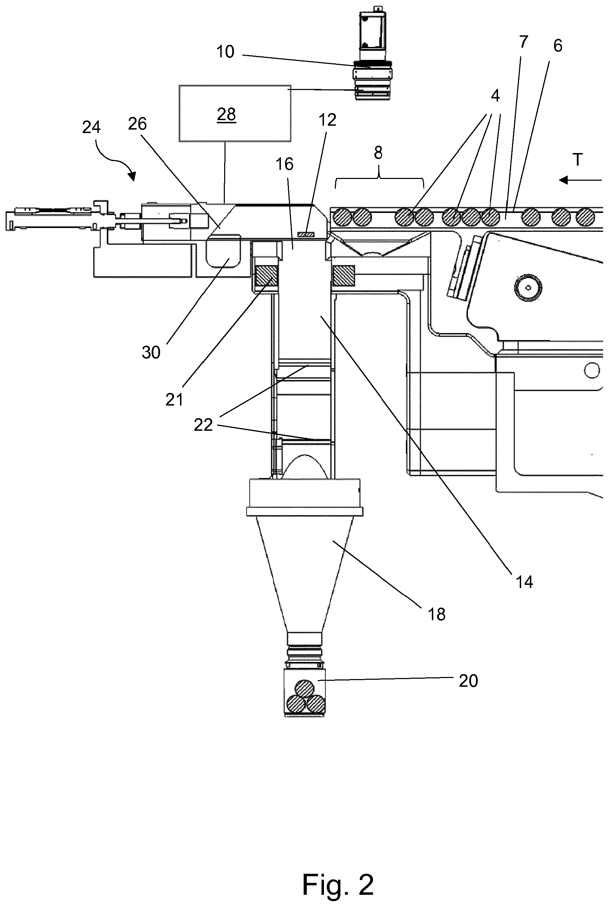

In Fig. 1 und 2 ist eine erste Ausführungsform der erfindungsgemäßen Vorrichtung zur Übergabe von medizinischen Produkten 4 dargestellt. Im Rahmen der Erfindung liegen die medizinischen Produkte 4 in Form von Tabletten, Kapseln, Oblongs oder Dragees vor.

Die Vorrichtung umfasst einen Schwingförderer 6 mit einer Mehrzahl von Förderspuren 7 zum Transportieren der medizinischen Produkte 4 von einem Aufnahmebereich (nicht dargestellt) zu einem Abgabebereich 8 der Förderspuren 7. Von der Mehrzahl von Förderspuren 7 ist in der dargestellten Querschnittsansicht lediglich eine Förderspur 7 zu sehen. Die weiteren Förderspuren liegen in die Zeichenebene hinein oder aus der Zeichenebene hinaus versetzt parallel zur dargestellten Förderspur 7. Die Transportrichtung der medizinischen Produkte 4 auf dem Schwingförderer 6 ist mit dem Pfeil T gekennzeichnet. Für die Befüllung des Schwingförderers 6 mit den medizinischen Produkten 4 existieren im Stand der Technik vielfältige Möglichkeiten.

Der Transport der medizinischen Produkte 4 auf dem Schwingförderer 6 erfolgt mittels Vibrationen des Schwingförderers 6. Der Schwingförderer 6 kann eine leichte Neigung zur Horizontalen in Richtung des Abgabebereichs 8 aufweisen.

Die medizinischen Produkte 4 werden in Förderspuren 7, die üblicherweise als in Transportrichtung T verlaufende, nach oben offene rillenförmige Nuten oder Kanäle ausgestaltet sind, transportiert. Ein Schwingförderer 6 weist üblicherweise eine Mehrzahl von quer zur Transportrichtung T nebeneinander angeordneten Förderspuren 7 auf. In bestimmten Anwendungsbereichen weist ein Schwingförderer 6 mehrere Fördersegmente auf, die quer zur Transportrichtung T nebeneinander angeordnet sind, wobei in jedem Fördersegment jeweils eine Mehrzahl, z.B. vier bis acht, Förderspuren 7 nebeneinander verlaufen. Der Schwingförderer 6 kann auch in Transportrichtung T segmentiert sein, und die einzelnen Segmente können eine unterschiedliche Neigung aufweisen und/oder zu einer unterschiedlichen Schwingung angetrieben sein.

Der Abgabebereich 8 einer Förderspur 7 ist als Bereich nahe dem in Transportrichtung T stromabwärtigen Ende des Schwingförderers definiert und besitzt eine Breite von ca. 1 bis 10 cm, vorzugsweise zwischen 2 und 8 cm. Eine Detektionsvorrichtung 10 zur Detektion von Schlechtprodukten 12 ist für jede Förderspur 7 vorgesehen. Die Detektionsvorrichtung 10 kann vorzugsweise, wie in den Fig. 1 und 2 dargestellt, über der jeweiligen Förderspur 7 angeordnet sein und besonders bevorzugt über dem Abgabebereich 8 der jeweiligen Förderspur 7. Die Detektionsvorrichtung 10 kann hierbei auch einen größeren Inspektionsbereich, der den Abgabebereich 8 umfasst, abdecken. Es ist schließlich auch möglich, die Detektionsvorrichtung 10 weiter stromaufwärts über dem Schwingförderer 6 anzuordnen oder mehrere einzelne Detektionsvorrichtungen 10 an verschiedenen Stellen über dem Schwingförderer 6 anzuordnen.

Beispielsweise kann die Detektionsvorrichtung 10 ein Kamera- oder Videosystem sein, das eine oder mehrere einzelne Kameras aufweist. Ein derartiges Kamerasystem ist insbesondere geeignet zur Erkennung von Schlechtprodukten 12 in Form von Bruchstücken. Die Überwachung mittels der Detektionsvorrichtung 10 kann eine kontinuierliche Videoüberwachung sein, es kann aber auch ausreichen, zu bestimmten Zeitpunkten fotografische Aufnahmen zu machen und auszuwerten. Ein Schlechtprodukt 12 kann auch ein medizinisches Produkt, das andere vorbestimmte Kriterien im Hinblick auf Form, Farbe, Wirkstoffzusammensetzung etc. nicht erfüllt. Die Detektionsvorrichtung 10 kann auch einen NIR-Sensor oder andere Arten von Sensoren aufweisen.

Nach Verlassen des Schwingförderers 6 fallen die jeweiligen medizinischen Produkte 4 durch eine Aufnahmeöffnung 16 in einen Schacht 14, der angrenzend an oder nahe dem Abgabebereich 8 der jeweiligen Förderspur 7 angeordnet ist. In besonders bevorzugten Ausgestaltungen ist jeweils ein eigener Schacht 14 einer Förderspur 7 zugeordnet. Es ist aber auch möglich, dass die medizinischen Produkte 4 von mehreren Förderspuren 7 in denselben Schacht 14 fallen. Im Schacht 14 werden die medizinischen Produkte 4 in Richtung eines Abfüllbereichs 18 weitergeleitet, in der Regel mittels Schwerkraft, wo sie in entsprechende Behälter 20 befüllt werden. Die Behälter sind vorzugsweise sogenannte Flaschen, d.h. aus Kunststoff oder Glas hergestellte und mit einem Deckel zu versehende Behälter, sie können aber auch als Blisterverpackungen oder andere Arten von Behältern ausgebildet sein.

Jede Förderspur 7 des Schwingförderers 6 definiert zusammen mit dem zugehörigen Schacht 14 jeweils einen Transportpfad für die medizinischen Produkte 4. Mehrere dieser Transportpfade sind somit üblicherweise quer zur Transportrichtung T nebeneinander angeordnet.

Im Schacht 14 kann, vorzugsweise nahe seiner Aufnahmeöffnung 16, ein Zählsensor 21 zum Zählen der durch den Schacht 14 hindurchfallenden medizinischen Produkte 4 vorgesehen sein. Ein solcher Zählsensor 21 ist beispielsweise als Lichtschranke oder Lichtgitter ausgebildet.

Im Schacht 14 können zur Vereinfachung des Abfüllvorgangs außerdem ein oder mehrere Absperrschieber 22 vorgesehen sein, die den Schacht 14 verschließen oder öffnen können. In der Regel wird eine vorbestimmte Anzahl von medizinischen Produkten 4 oberhalb des oberen Absperrschiebers 22 gesammelt, anschließend wird dieser Absperrschieber 22 zurückgezogen und die medizinischen Produkte 4 fallen im Schacht eine Stufe tiefer auf den unteren Absperrschieber 22, der wiederum die vorbestimmte Anzahl von medizinischen Produkten 4 zum jeweiligen Behälter 20 freigibt. In der Zwischenzeit wurde der obere Absperrschieber 22 bereits wieder in seine den Schacht 14 verschließende Stellung zurück verschoben, so dass neu eintreffende medizinische Produkte 4 wiederum oberhalb des oberen Absperrschiebers 22 gesammelt werden.

Zur Ausschleusung von durch die Detektionsvorrichtung 10 ermittelten Schlechtprodukten 12 ist eine Ausleiteinheit 24 vorgesehen, die mindestens eine, vorzugsweise mehrere nebeneinander angeordnete Ausleitvorrichtungen 26 umfasst. Es ist bevorzugt, dass je Förderspur 7 des Schwingförderers 6 eine eigene Ausleitvorrichtung 26 vorgesehen ist. Es kann aber auch eine gemeinsame Ausleitvorrichtung 26 für mehrere nebeneinander angeordnete Förderspuren 7 vorliegen.

Jede Ausleitvorrichtung 26 ist nahe dem Abgabebereich 8 der zugehörigen Förderspur 7 des Schwingförderers 6 angeordnet. Jede Ausleitvorrichtung 26 ist verschiebbar oder verschwenkbar gelagert und kann zwischen einer deaktivierten Stellung (Fig. 1), in der sie sich außerhalb des Transportpfads der medizinischen Produkte 4 befindet, und einer aktivierten Stellung (Fig. 2), in der sie sich im Transportpfad der medizinischen Produkte 4 befindet, bewegt werden. Im konkreten Ausführungsbeispiel gibt die Ausleitvorrichtung 26 in der deaktivierten Stellung aus Fig. 1 die Aufnahmeöffnung 16 des Schachts 14 frei und verschließt die Aufnahmeöffnung 16 des Schachts 14 in der aktivierten Stellung gemäß Fig. 2. Die Schaltung der Ausleitvorrichtung 26 zwischen aktivierter Stellung und deaktivierter Stellung erfolgt mittels einer Steuervorrichtung 28, die die Ergebnisse der Erkennung von Schlechtprodukten 12 mittels der Detektionsvorrichtung 10 in ein entsprechendes Steuersignal für die Ausleitvorrichtung 26 umwandelt.

Wenn mehrere Ausleitvorrichtungen 26 nebeneinander vorliegen, ist vorzugsweise jede einzelne Ausleitvorrichtung 26 getrennt von der Steuervorrichtung 28 ansteuerbar. Auf diese Weise ist es z.B. möglich, nur eine Förderspur 7 des Schwingförderers 6, auf der ein Schlechtprodukt 12 detektiert wurde, durch Aktivierung der zugehörigen Ausleitvorrichtung 26 vom zugehörigen Schacht 14 abzukoppeln, während die übrigen Förderspuren 7 weiterhin im Normalbetrieb arbeiten.

Erfindungsgemäß bildet die Ausleitvorrichtung 26 in der aktivierten Stellung eine Verlängerung der Förderspur 7. In der in Fig. 1 und 2 dargestellten Ausführungsform der erfindungsgemäßen Vorrichtung ist die Ausleitvorrichtung 26 von der deaktivierten Stellung in die aktivierte Stellung verschiebbar.

Es ist bevorzugt, dass die Ausleitvorrichtung 26 auch in der aktivierten Stellung von den Schwingungen der Förderspur 7 entkoppelt ist. In der dargestellten Ausführungsform erfolgt die Verschiebung der Ausleitvorrichtung 26 horizontal. Es ist auch denkbar, dass die Verschiebung unter einem spitzen Winkel zur Horizontalen von unten erfolgt.

Insgesamt wird bewirkt, dass die Ausleitvorrichtung 26 in der aktivierten Stellung im oder nahe dem Abgabebereich der Förderspur 7 eine Änderung des Transportpfads der medizinischen Produkte 4 bewirkt. In der in Fig. 2 dargestellten aktivierten Stellung ist der Bodenbereich der Ausleitvorrichtung 26 unmittelbar anschließend an den Abgabebereich 8 der Förderspur 7 angeordnet und liegt minimal tiefer als der Bodenbereich der Förderspur 7. Es ist aber auch denkbar, dass der Bodenbereich der Ausleitvorrichtung 26 an der Übergabestelle auf einer Ebene mit dem Bodenbereich der jeweiligen Förderspur 7 liegt oder sogar minimal höher liegt als der Bodenbereich der Förderspur 7.

Zum besseren und schnelleren Abtransport des in die Ausleitvorrichtung 26 eintretenden Schlechtprodukts 12 umfasst die Ausleiteinheit 24 mindestens eine Absaugvorrichtung 30. Durch zeitweises gesteuertes Anlegen eines Vakuums wird das in die Ausleitvorrichtung 26 eingetretene Schlechtprodukt 12 abgesaugt und entsorgt.

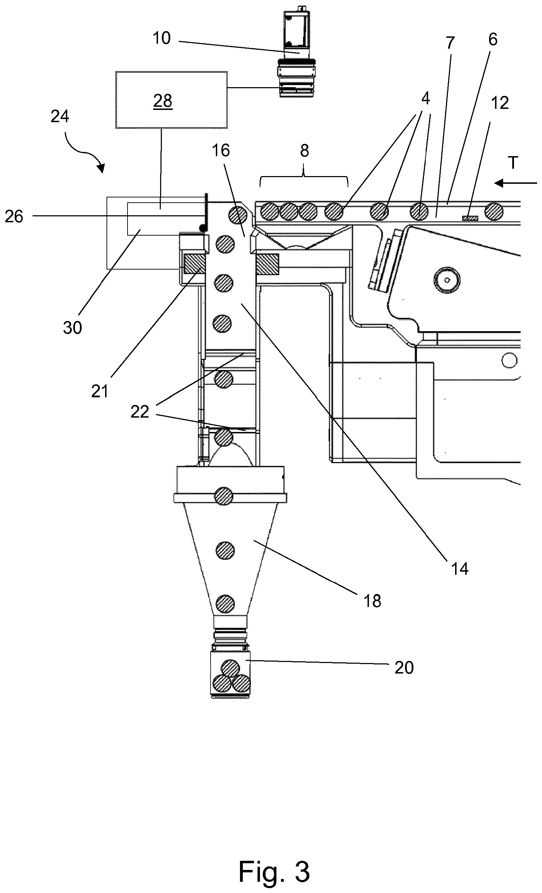

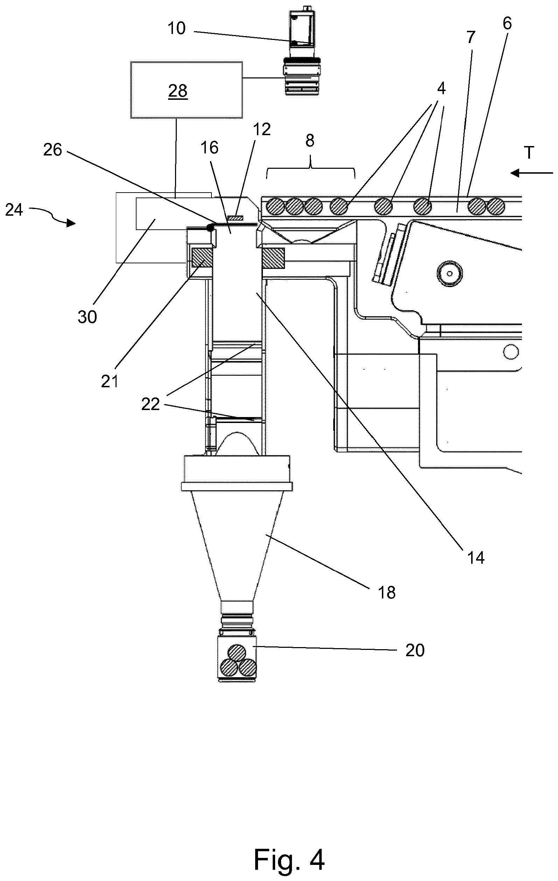

Die in Fig. 3 und 4 dargestellte alternative zweite Ausführungsform der erfindungsgemäßen Vorrichtung zur Übergabe von medizinischen Produkten 4 ist in den meisten Elementen übereinstimmend zur Ausführungsform aus Fig. 1 und 2. Identische Bezugszeichen bezeichnen identische Elemente. Falls nicht anders beschrieben, gilt die zugehörige Beschreibung für die Ausführungsform aus Fig. 1 und 2 auch für die Ausführungsform aus Fig. 3 und 4.

Im Unterschied zur Ausführungsform aus Fig. 1 und 2 ist die Ausleitvorrichtung 26 zwischen der deaktivierten Stellung und der aktivierten Stellung nicht verschiebbar, sondern verschwenkbar. In der in Fig. 3 dargestellten deaktivierten Stellung ist die Ausleitvorrichtung 26 nach oben geschwenkt und gibt die Aufnahmeöffnung 16 des Schachts 14 frei. In der in Fig. 4 dargestellten aktivierten Stellung ist die Ableitvorrichtung 26 im Wesentlichen in die Horizontale geschwenkt und überdeckt die Aufnahmeöffnung 16 des Schachts 14.

In allen Ausführungsformen werden als Antrieb zur Bewegung der Ableitvorrichtungen vorzugsweise Pneumatikzylinder verwendet. Auch die Verwendung von Linearmotoren, Schrittmotoren oder Servomotoren ist denkbar.

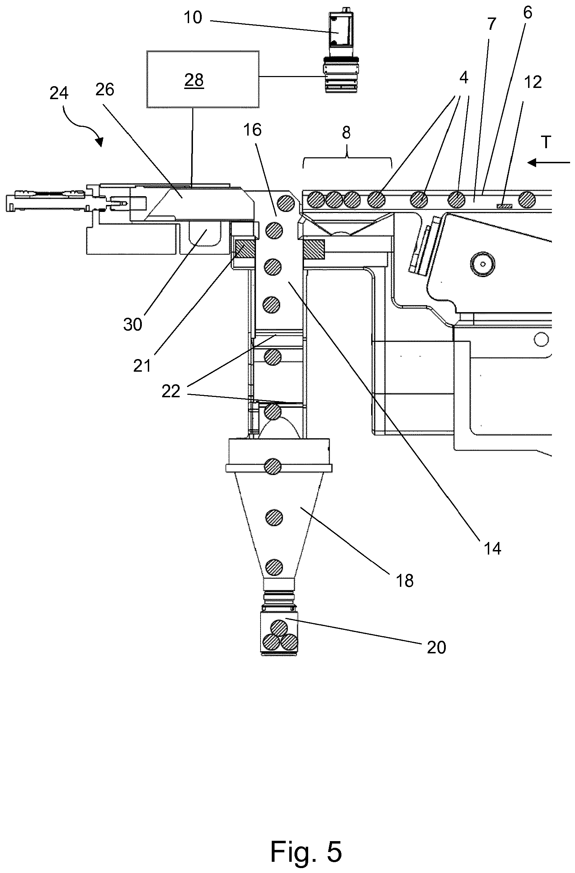

Bezug nehmend auf Fig. 5 bis 13 soll nun das erfindungsgemäße Verfahren zur Übergabe von medizinischen Produkten 4 näher beschrieben werden.

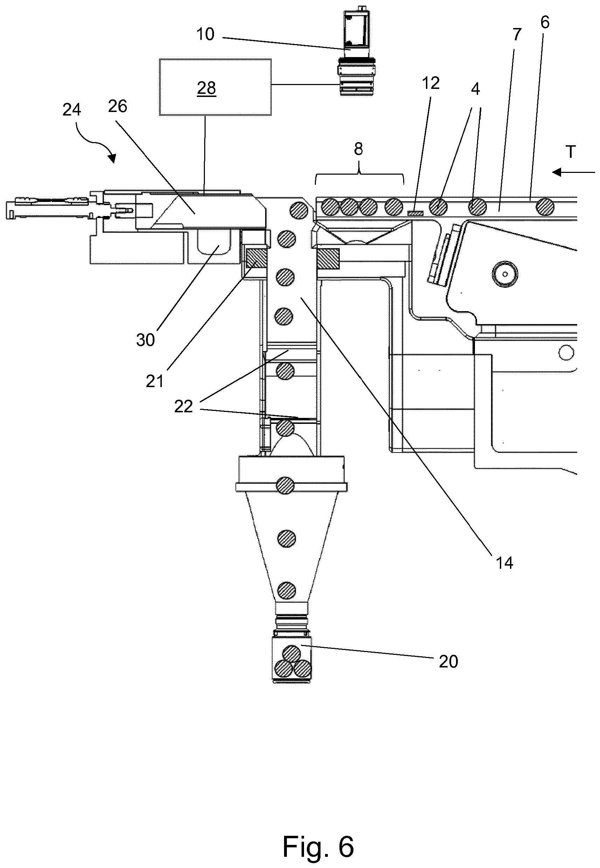

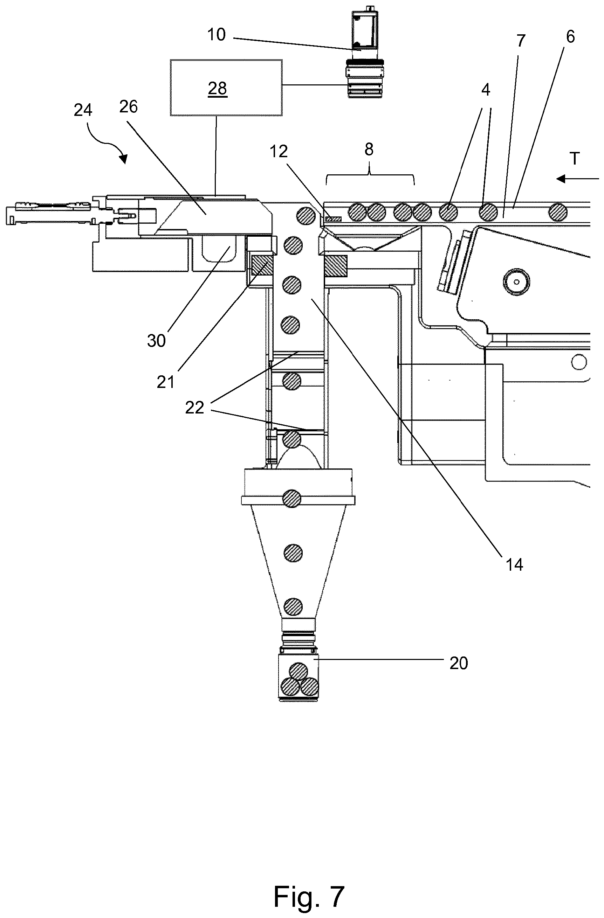

In Fig. 5 ist eine Ausgangssituation dargestellt, die der in Fig. 1 dargestellten Situation entspricht. Medizinische Produkte 4 werden auf dem Schwingförderer 6 gefördert, fallen in den Schacht 14 und werden in Behälter 20 abgefüllt. Im rechten Bereich des Schwingförderers 6 ist bereits ein als Bruchstück dargestelltes Schlechtprodukt 12 zu erkennen. In Fig. 6 ist das Schlechtprodukt 12 bereits nahe am Abgabebereich 8 der Förderspur 7 angekommen, und in Fig. 7 wurde das Schlechtprodukt 12 von der Detektionsvorrichtung 10 bereits detektiert und die Vibration des Schwingförderers 6 wurde abgestellt.

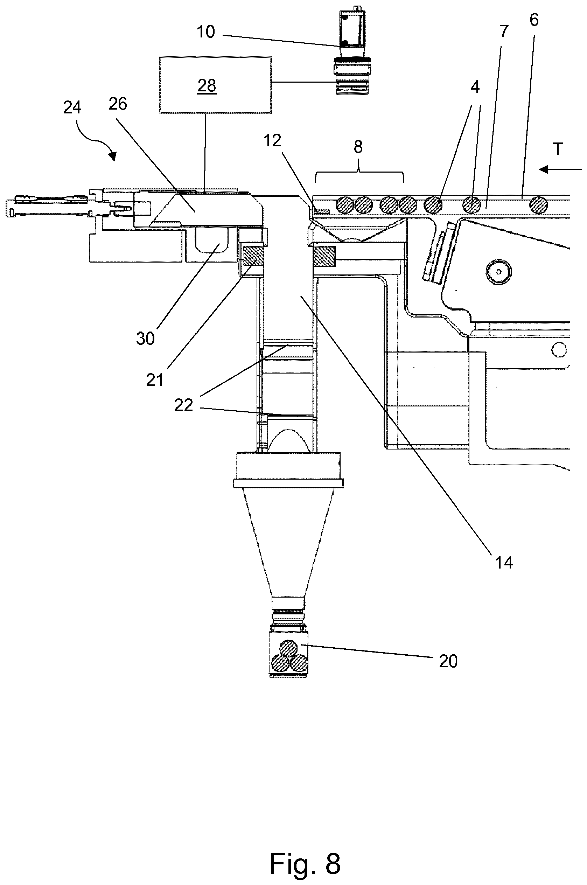

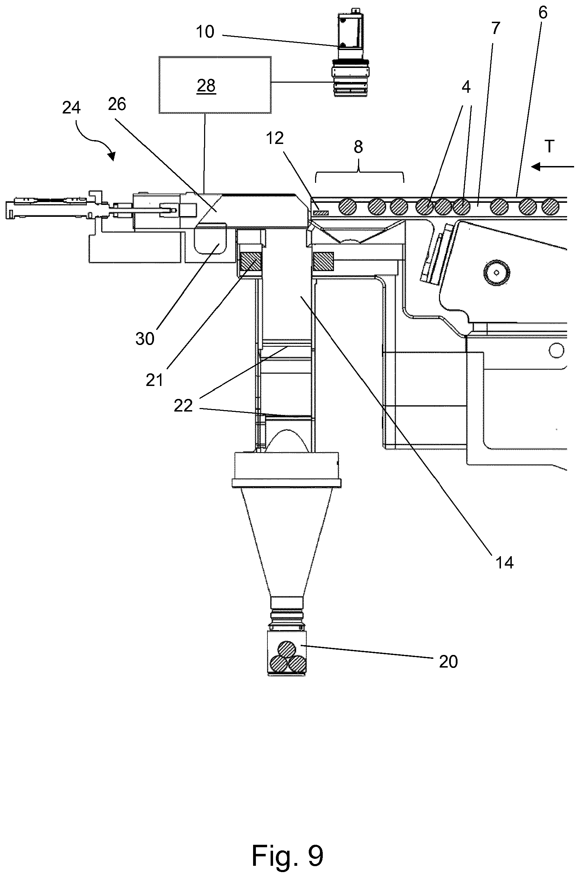

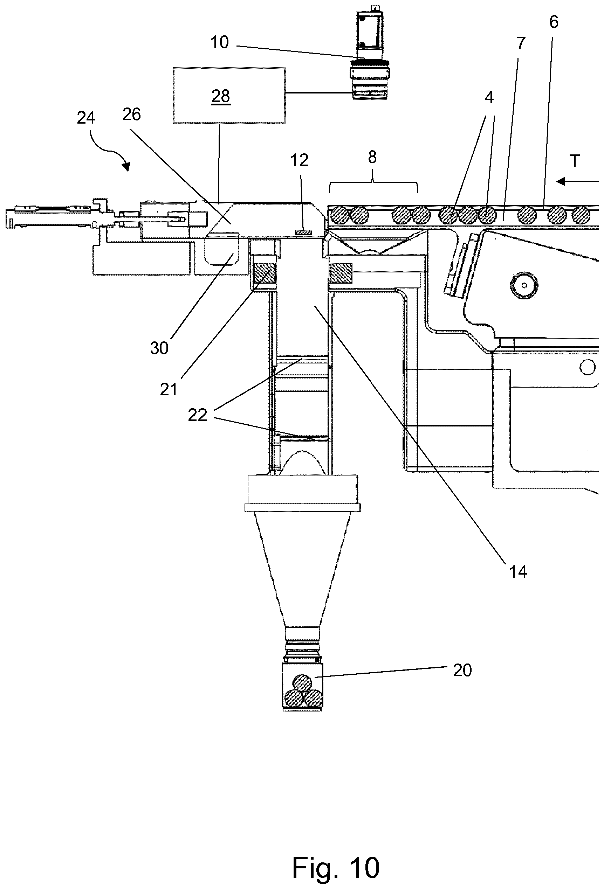

Das Schlechtprodukt 12 befindet sich somit in einer stationären Stellung am Rand der Förderspur 7. Vorzugsweise wird in dieser Stellung abgewartet, bis sämtliche medizinischen Produkte 4 aus dem zugehörigen Schacht 14 in den Behälter 20 befüllt sind (Fig. 8) oder auf den Absperrschiebern 22 zu liegen kommen. Anschließend wird die Ausleitvorrichtung 26 in die aktivierte Stellung gebracht (Fig. 9) und der Schwingförderer wird wieder angeschaltet (Fig. 10).

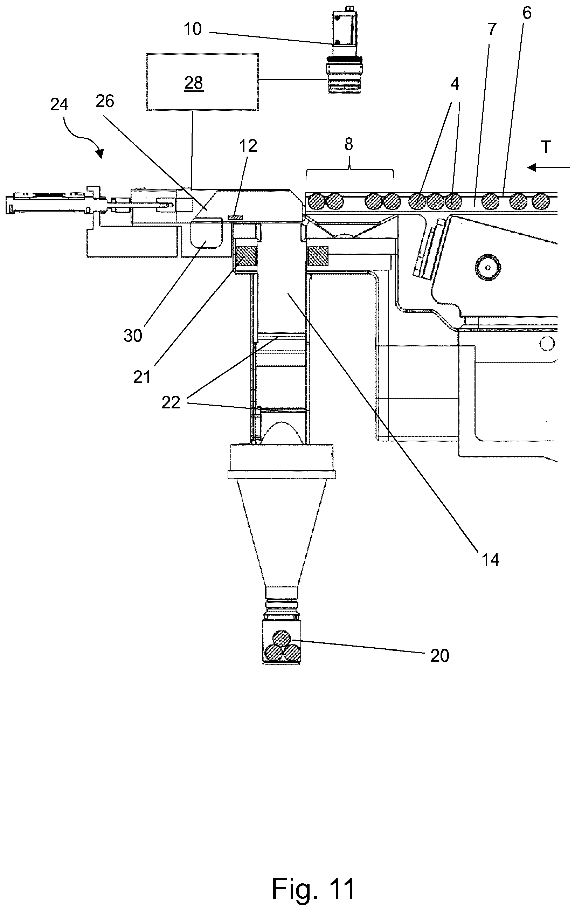

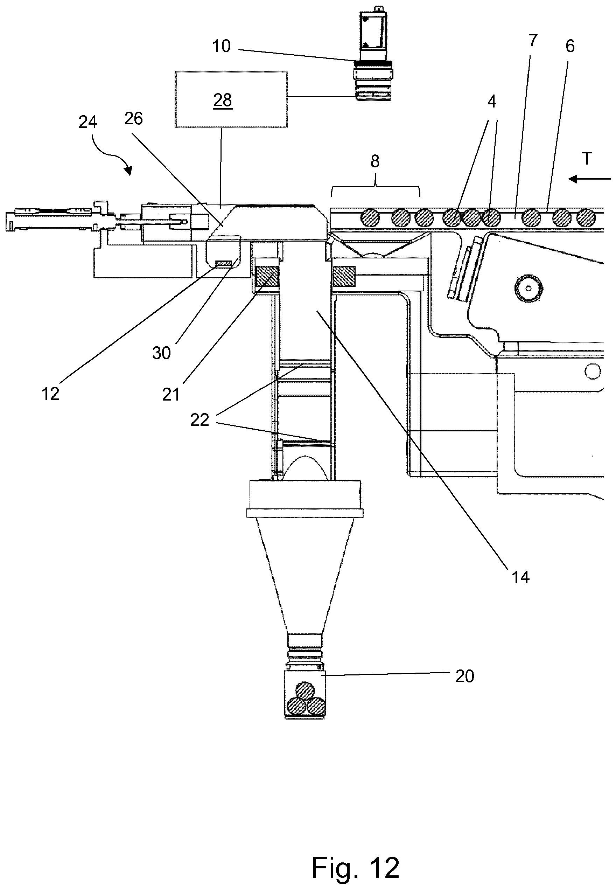

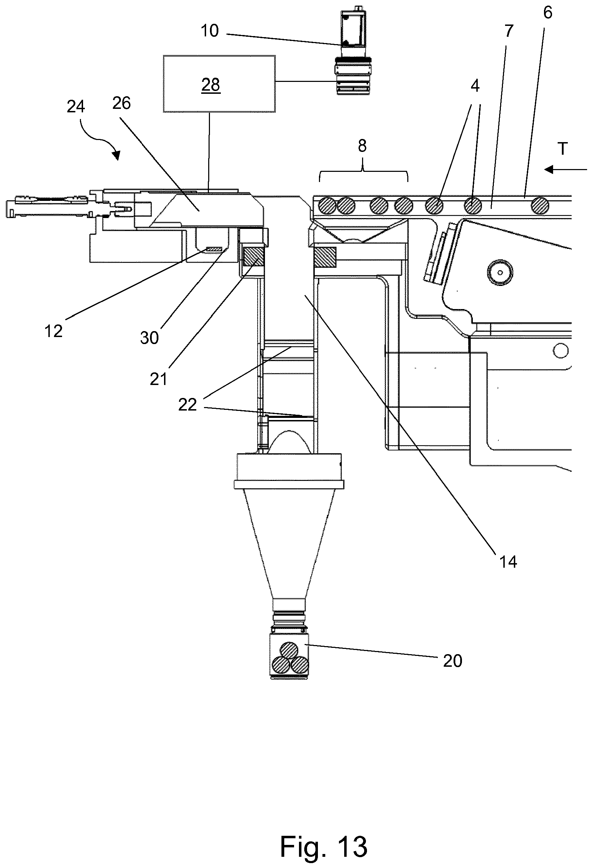

Die Ansaugvorrichtung 30 wird angeschaltet und das in die Ausleitvorrichtung 26 eingetretene Schlechtprodukt 12 wird schnell abgesaugt (Fig. 11 und 12). Die Detektionsvorrichtung 10 überwacht den Ausschleusevorgang des Schlechtprodukts 12, indem es den Abgabebereich 8 der Förderspur 7 beobachtet. Sobald die Detektionsvorrichtung 10 kein Schlechtprodukt 12 mehr erkennen kann, wird die Ausleitvorrichtung 26 wieder in die deaktivierte Stellung bewegt (Fig. 13). Anschließend kann der Abfüllvorgang der medizinischen Produkte 4 auf normale Weise fortgeführt werden.

Sobald die Ausleitvorrichtung 26 in die aktivierte Stellung bewegt wurde, befindet sich der Zählsensor 21 in einem Überwachungsmodus. Bei aktivierter Ausleitvorrichtung 26 sollte kein Produkt den Zählsensor 21 passieren, weil ansonsten davon auszugehen ist, dass dies das Schlechtprodukt 12 ist, das unbeabsichtigt dennoch in den Schacht 14 gelangt ist. In einem solchen Fall wird bei Feststellung eines Produkts durch den Zählsensor 21 eine Abbruchsequenz des Abfüllvorgangs eingeleitet, die beispielsweise die Entfernung aller zu diesem Zeitpunkt zu befüllenden Behälter 20 und der im Schacht 14 befindlichen medizinischen Produkte 4 beinhaltet. Außerdem erfolgt üblicherweise ein Maschinenstopp.

Beispielsweise beginnt der Überwachungsmodus des Zählsensors 21 mit dem Stopp des Schwingförderers 6 und endet mit dem Zeitpunkt des Wiedereinschaltens des Schwingförderers 6, ggf. addiert mit einem zusätzlichen Zeitwert. Dieser zusätzliche Zeitwert ist vorzugsweise die Zeit, die ein Produkt benötigt, um von der Höhe der Förderspur 7 bis in den Bereich des Zählsensors 21 zu fallen.

Es ist nicht zwangsläufig notwendig, den Schwingförderer 6 abzuschalten, sobald das Schlechtprodukt 12 in den Abgabebereich 8 der zugehörigen Förderspur 7 eingetreten ist. Unter bestimmten Umständen ist es auch möglich, den Schwingförderer 6 ununterbrochen weiterlaufen zu lassen, sofern die Steuervorrichtung 28 die Geschwindigkeit des Schlechtprodukts 12 auf der Förderspur 7 berücksichtigt und die Ausleitvorrichtung 26 zum jeweils richtigen Zeitpunkt in die aktivierte Stellung bewegt.

In bestimmten Konfigurationen kann es auch ausreichend sein, den Schwingförderer 6 so lange im Stillstand zu belassen, bis die Absaugvorrichtung 30 das Schlechtprodukt 12 vom Abgabebereich 8 der Förderspur 7 direkt abgesaugt hat. Dann würde der Schwingförderer 6 erst wieder in Vibration versetzt werden, wenn die Detektionsvorrichtung 10 feststellt, dass das Schlechtprodukt 12 von der Förderspur 7 entfernt wurde und die Ausleitvorrichtung 26 wieder in die deaktivierte Stellung bewegt wurde.

Schließlich kann es auch notwendig oder vorteilhaft sein, bei der unter Bezugnahme auf Fig. 5 bis 13 beschriebenen Abfolge den Schwingförderer 6 nochmals auszuschalten, sobald das Schlechtprodukt 12 vom Abgabebereich 8 der Förderspur 7 entfernt wurde bzw. sobald die Detektionsvorrichtung 10 kein Schlechtprodukt 12 mehr erkennen kann. Um sicherzustellen, dass das Schlechtprodukt 12 oder die Schlechtprodukte 12 sicher abgesaugt wurden, kann die Ableitvorrichtung 26 noch eine gewisse Zeit in aktivierter Stellung verbleiben und auch die Absaugvorrichtung 30 bleibt angeschaltet. Anschließend wird die Ableitvorrichtung 26 in die deaktivierte Stellung bewegt und die Absaugvorrichtung 26 abgeschaltet.

## Patentansprüche

1. Vorrichtung zur Übergabe von medizinischen Produkten (4) mit
einem Schwingförderer (6) mit einer Mehrzahl von nebeneinander angeordneten Förderspuren (7) zum Transportieren der medizinischen Produkte (4) zu einem Abgabebereich (8) der Förderspuren (7);
einer Detektionsvorrichtung (10) zur Detektion von Schlechtprodukten (12) in jeder Förderspur (7);
mindestens einem Schacht (14), dessen Aufnahmeöffnung (16) nahe dem Abgabebereich (8) mindestens einer der Förderspuren (7) angeordnet ist, zur Weiterleitung der aus der oder den Förderspuren (7) austretenden medizinischen Produkte (4) in Richtung eines Abfüllbereichs (18), wobei die Förderspuren (7) und der mindestens eine Schacht (14) gemeinsam mehrere Transportpfade für die medizinischen Produkte (4) definieren;
einer Ausleiteinheit (24) für Schlechtprodukte (12), die nahe dem Abgabebereich (8) der Förderspuren (7) angeordnet ist und mindestens eine Ausleitvorrichtung (26) umfasst; und
einer Steuervorrichtung (28), die darauf ausgerichtet ist, die mindestens eine Ausleitvorrichtung (26) zu aktivieren, wenn von der Detektionsvorrichtung (10) ein Schlechtprodukt (12) erkannt wurde,
wobei die mindestens eine Ausleitvorrichtung (26) verschiebbar oder verschwenkbar gelagert ist und zwischen einer deaktivierten Stellung, in der sie sich außerhalb eines jeden Transportpfads der medizinischen Produkte (4) befindet, und einer aktivierten Stellung, in der sie sich in mindestens einem der Transportpfade der medizinischen Produkte (4) befindet, bewegbar ist,
**dadurch gekennzeichnet, dass**
die mindestens eine Ausleitvorrichtung (26) derart verschiebbar oder verschwenkbar ist, dass sie in der aktivierten Stellung eine Verlängerung mindestens einer der Förderspuren (7) bildet.

2. Vorrichtung nach Anspruch 1, **dadurch gekennzeichnet, dass** die mindestens eine Ausleitvorrichtung (26) derart verschiebbar oder verschwenkbar ist, dass sie in der aktivierten Stellung im oder nahe dem Abgabebereich (8) mindestens einer der Förderspuren (7) eine Änderung mindestens eines der Transportpfade der medizinischen Produkte (4) bewirkt.

3. Vorrichtung nach einem der vorangehenden Ansprüche, **dadurch gekennzeichnet, dass** die mindestens eine Ausleitvorrichtung (26) derart verschiebbar oder verschwenkbar ist, dass sie in der aktivierten Stellung von den Schwingungen der Förderspuren (7) entkoppelt ist.

4. Vorrichtung nach einem der vorangehenden Ansprüche, **dadurch gekennzeichnet, dass** die mindestens eine Ausleitvorrichtung (26) im Wesentlichen horizontal verschiebbar ist.

5. Vorrichtung nach einem der vorangehenden Ansprüche, **dadurch gekennzeichnet, dass** die Ausleiteinheit (24) je Förderspur (7) jeweils eine eigene Ausleitvorrichtung (26) aufweist.

6. Vorrichtung nach einem der vorangehenden Ansprüche, **dadurch gekennzeichnet, dass** die Ausleiteinheit (24) mindestens eine Absaugvorrichtung (30) für Schlechtprodukte (12) umfasst.

7. Vorrichtung nach einem der vorangehenden Ansprüche, **dadurch gekennzeichnet, dass** die Detektionsvorrichtung (10) ein Kamerasystem mit mindestens einer über mindestens einer der Förderspuren (7) angeordneten Kamera aufweist.

8. Verfahren zur Übergabe von medizinischen Produkten (4), umfassend:
- Transportieren von medizinischen Produkten (4) auf einem Schwingförderer (6) mit einer Mehrzahl von nebeneinander angeordneten Förderspuren (7) zu einem Abgabebereich (8) der Förderspuren (7) und von dort in mindestens einen Schacht (14);
- Detektieren eines Schlechtprodukts (12) in einer der Förderspuren (7); und
- Aktivieren einer Ausleitvorrichtung (26) für Schlechtprodukte (12), die nahe dem Abgabebereich (8) dieser Förderspur (7) angeordnet ist, im Falle des Detektierens eines Schlechtprodukts (12), wobei die Ausleitvorrichtung (26) bei Aktivierung in eine aktivierte Stellung verschoben oder verschwenkt wird, in der sie sich in einem Transportpfad des Schlechtprodukts (12) befindet,
**dadurch gekennzeichnet, dass**
die Ausleitvorrichtung (26) in der aktivierten Stellung eine Verlängerung der Förderspur (7) bildet.

9. Verfahren nach Anspruch 8, **dadurch gekennzeichnet, dass** die Ausleitvorrichtung (26) in der aktivierten Stellung im Abgabebereich (8) der Förderspur (7) eine Änderung des Transportpfads des Schlechtprodukts (12) bewirkt.

10. Verfahren nach Anspruch 8 oder 9, **dadurch gekennzeichnet, dass** das in die Ausleitvorrichtung (26) eingetretene Schlechtprodukt (12) abgesaugt wird.

11. Verfahren nach einem der Ansprüche 8 bis 10, **dadurch gekennzeichnet, dass** das Detektieren des Schlechtprodukts (12) zumindest im Abgabebereich (8) der Förderspur (7) erfolgt.

12. Verfahren nach einem der Ansprüche 8 bis 11, **dadurch gekennzeichnet, dass** ein dem zugehörigen Schacht (14) zugeordneter Zählsensor (21) während der Ausleitung des Schlechtprodukts (12) sich in einem Überwachungsmodus befindet und bei Zählung eines Produkts (12) eine Abbruchsequenz des Abfüllvorgangs eingeleitet wird.

13. Verfahren nach einem der Ansprüche 8 bis 12, **dadurch gekennzeichnet, dass** die Förderspur (7) unbewegt geschaltet wird, wenn das Schlechtprodukt (12) sich nahe dem Abgabebereich (8) auf der Förderspur (7) befindet, und die Förderspur (7) erst dann wieder in Schwingung versetzt wird, wenn sich die Ausleitvorrichtung (26) in der aktivierten Stellung befindet.

## Claims

1. A device for transferring medical products (4) comprising:
an oscillating conveyor (6) having a plurality of conveying lanes (7) arranged next to each other for conveying the medical products (4) to a delivery area (8) of the conveying lanes (7);
a detection device (10) for detecting defective products (12) in each conveying lane (7);
at least one shaft (14) having a receiving opening (16) arranged close to the delivery area (8) of at least one of the conveying lanes (7) for conveying the medical products (4) emerging from one or more of the conveying lanes (7) towards a filling area (18), wherein the conveying lanes (7) and the at least one shaft (14) together define a plurality of transport paths for the medical products (4);
a diverter unit (24) for defective products (12), which is arranged close to the delivery area (8) of the conveying lanes (7) and which comprises at least one diverter device (26); and
a control device (28) configured to activate the at least one diverter device (26) upon detection of a defective product (12) by the detection device (10);
wherein the at least one diverter device (26) is supported shiftably or pivotably and is movable between a deactivated position, in which it is arranged outside of each of the transport paths of the medical products (4), and an activated position, in which it is arranged in at least one of the transport paths of the medical products (4),
**characterized in that**
the at least one diverter device (26) is shiftable or pivotable in such a way that, in the activated position, it forms an extension of at least one of the conveying lanes (7).

2. The device according to claim 1, **characterized in that** the at least one diverter device (26) is shiftable or pivotable in such a way that, in the activated position, it causes a change in at least one of the transport paths of the medical products (4) in or close to the delivery area (8) of at least one of the conveying lanes (7).

3. The device according to any of the preceding claims, **characterized in that** the at least one diverter device (26) is shiftable or pivotable in such a way that, in the activated position, it is decoupled from the oscillations of the conveying lanes (7).

4. The device according to any of the preceding claims, **characterized in that** the at least one diverter device (26) is shiftable in a substantially horizontal direction.

5. The device according to any of the preceding claims, **characterized in that** the diverter unit (24) comprises a separate diverter device (26) for each conveying lane (7).

6. The device according to any of the preceding claims, **characterized in that** the diverter unit (24) comprises at least one suction device (30) for defective products (12).

7. The device according to any of the preceding claims, **characterized in that** the detection device (10) comprises a camera system having at least one camera arranged above at least one of the conveying lanes (7).

8. A method for transferring medical products (4), comprising:
- conveying medical products (4) on an oscillating conveyor (6) having a plurality of conveying lanes (7) arranged next to each other to a delivery area (8) of the conveying lanes (7) and from there into at least one shaft (14);
- detecting a defective product (12) in one of the conveying lanes (7); and
- activating a diverter device (26) for defective products (12), when a defective product (12) is detected, the diverter device (26) being arranged close to the delivery area (8) of the conveying lane (7) in which the defective product (12) is detected, wherein the diverter device (26), when activated, is shifted or pivoted into an activated position, in which the diverter device (26) is located in a transport path of the defective product (12),
**characterized in that**
the diverter device (26), when in the activated position, forms an extension of the conveying lane (7).

9. The method according to claim 8, **characterized in that** the diverter device (26), when in the activated position, causes a change in the transport path of the defective product (12) in the delivery area (8) of the conveying lane (7).

10. The method according to claim 8 or 9, **characterized in that** the defective product (12), which has entered the diverter device (26), is removed by suction.

11. The method according to any of claims 8 to 10, **characterized in that** detecting the defective product (12) occurs at least in the delivery area (8) of the conveying lane (7).

12. The method according to any of claims 8 to 11, **characterized in that**, during the diversion of the defective product (12), a counting sensor (21) associated with the respective shaft (14) is in a monitoring mode, and, upon counting of a product (12), an interrupt sequence of the filling process is initiated.

13. The method according to any of claims 8 to 12, **characterized in that** the conveying lane (7) is turned to a motionless state when the defective product (12) on the conveying lane (7) is arranged adjacent to the delivery area (8), and that the conveying lane (7) is not set into oscillation again until after the diverter device (26) has been moved into the activated position.

## Revendications

1. Dispositif de transfert de produits médicaux (4) comprenant
un convoyeur vibrant (6) comprenant une pluralité de voies de convoyage (7), disposées les unes à côté des autres, servant au transport des produits médicaux (4) jusqu'à une région de distribution (8) des voies de convoyage (7) ;
un dispositif de détection (10) servant à la détection de produits défectueux (12) dans chaque voie de convoyage (7) ;
au moins un conduit (14), dont l'ouverture de réception (16) est disposée près de la région de distribution (8) d'au moins l'une des voies de convoyage (7), servant à l'acheminement ultérieur des produits médicaux (4) sortant de la ou des voies de convoyage (7) en direction d'une région de remplissage (18), les voies de convoyage (7) et l'au moins un conduit (14) définissant ensemble plusieurs trajets de transport pour les produits médicaux (4) ;
une unité d'évacuation (24) de produits défectueux (12), qui est disposée près de la région de distribution (8) des voies de convoyage (7) et comporte au moins un dispositif d'évacuation (26) ; et
un dispositif de commande (28), qui est configuré pour activer l'au moins un dispositif d'évacuation (26) lorsqu'un produit défectueux (12) a été détecté par le dispositif de détection (10),
l'au moins un dispositif d'évacuation (26) étant monté déplaçable ou pivotant et étant mobile entre une position désactivée, dans laquelle il se trouve à l'extérieur de chaque trajet de transport des produits médicaux (4), et une position activée, dans laquelle il se trouve dans au moins l'un des trajets de transport des produits médicaux (4),
**caractérisé en ce que**
l'au moins un dispositif de déviation (26) est déplaçable ou pivotant de telle sorte que, dans la position activée, il forme un prolongement d'au moins l'une des voies de convoyage (7).

2. Dispositif selon la revendication 1, **caractérisé en ce que** l'au moins un dispositif d'évacuation (26) est déplaçable ou pivotant de telle sorte que, dans la position activée, il provoque un changement d'au moins l'un des trajets de transport des produits médicaux (4) dans ou près de la région de distribution (8) d'au moins l'une des voies de convoyage (7).

3. Dispositif selon l'une des revendications précédentes, **caractérisé en ce que** l'au moins un dispositif d'évacuation (26) est déplaçable ou pivotant de telle sorte que, dans la position activée, il est découplé des vibrations des voies de convoyage (7).

4. Dispositif selon l'une des revendications précédentes, **caractérisé en ce que** l'au moins un dispositif d'évacuation (26) est déplaçable sensiblement horizontalement.

5. Dispositif selon l'une des revendications précédentes, **caractérisé en ce que** l'unité d'évacuation (24) présente, pour chaque voie de convoyage (7), respectivement un dispositif d'évacuation (26) propre.

6. Dispositif selon l'une des revendications précédentes, **caractérisé en ce que** l'unité d'évacuation (24) comporte au moins un dispositif d'aspiration (30) de produits défectueux (12).

7. Dispositif selon l'une des revendications précédentes, **caractérisé en ce que** le dispositif de détection (10) présente un système de caméra comprenant au moins une caméra disposée au-dessus d'au moins l'une des voies de convoyage (7).

8. Procédé de transfert de produits médicaux (4), comportant :
- le transport de produits médicaux (4) sur un convoyeur vibrant (6) comprenant une pluralité de voies de convoyage (7), disposées les unes à côté des autres, jusqu'à une région de distribution (8) des voies de convoyage (7) et, de là, dans au moins un conduit (14) ;
- la détection d'un produit défectueux (12) dans l'une des voies de convoyage (7) ; et
- l'activation d'un dispositif d'évacuation (26) de produits défectueux (12), qui est disposé près de la région de distribution (8) de cette voie de convoyage (7), en cas de détection d'un produit défectueux (12), le dispositif d'évacuation (26), en cas d'activation, étant déplacé ou pivoté dans une position active dans laquelle il se trouve dans un trajet de transport du produit défectueux (12),
**caractérisé en ce que**
le dispositif de déviation (26) forme, dans la position activée, un prolongement de la voie de convoyage (7).

9. Procédé selon la revendication 8, **caractérisé en ce que** le dispositif d'évacuation (26), dans la position activée, provoque un changement du trajet de transport du produit défectueux (12) dans la région de distribution (8) de la voie de convoyage (7).

10. Procédé selon la revendication 8 ou 9, **caractérisé en ce que** le produit défectueux (12) entré dans le dispositif d'évacuation (26) est aspiré.

11. Procédé selon l'une des revendications 8 à 10, **caractérisé en ce que** la détection du produit défectueux (12) s'effectue au moins dans la région de distribution (8) de la voie de convoyage (7).

12. Procédé selon l'une des revendications 8 à 11, **caractérisé en ce qu'**un capteur de comptage (21) affecté au conduit (14) associé se trouve dans un mode de surveillance pendant l'évacuation du produit défectueux (12) et, en cas de comptage d'un produit (12), une séquence d'interruption de l'opération de remplissage est lancée.

13. Procédé selon l'une des revendications 8 à 12, **caractérisé en ce que** la voie de convoyage (7) est commutée dans un état immobile lorsque le produit défectueux (12) se trouve près de la région de distribution (8) sur la voie de convoyage (7), et la voie de convoyage (7) n'est remise à nouveau en vibrations que lorsque le dispositif d'évacuation (26) se trouve dans la position activée.
